# EUROPEAN PATENT APPLICATION

(11) **EP 2 351 960 A1**
(43) Date of publication of application: **03.08.2011**
(21) Application number: 09828931.7
(22) Date of filing: 10.09.2009
(51) Int. Cl.: F21S 2/00, G02F 1/13357, F21Y 101/02

(54) **ILLUMINATION DEVICE, DISPLAY DEVICE, AND TELEVISION RECEPTION DEVICE**

(30) Priority: 25.11.2008 JP 2008299900
(71) Applicant: Sharp Kabushiki Kaisha, Osaka-shi, Osaka 545-8522 (JP)
(72) Inventor: MOURI Hirokasu, OSAKA 545-8522 (JP)
(74) Representative: Müller-Boré & Partner Patentanwälte
(86) International application number: PCT/JP2009/065836
(87) International publication number: WO 2010/061682

(57) **Abstract**

A lighting device 20 including a plurality of planar light sources 21 arranged in a planar direction. Each planar light source 21 has a light exit surface 43 on which a brightness distribution is biased. Bias directions of brightness distributions of the planar light sources 21 are the same. The planar light sources 21 are arranged with some of the planar light sources 21 and the other planar light sources 21 in alternate orientations such that the bias directions are different. High brightness areas and low brightness areas on the light exit surfaces 43 are arranged in lines. With this configuration, the high brightness areas are not in line and thus a bright band does not appear. Therefore, high display quality can be achieved.

## Description

### TECHNICAL FIELD

The present invention relates to a lighting device including a plurality of planar light sources, a display device and a television receiver.

### BACKGROUND ART

A lighting device including a plurality of planar light sources such as a lighting device disclosed in Patent Document 1 is known. The lighting device includes light emitting sources, such as LEDs, and light guide plates. Each light guide plate guides incident light from the light emitting source in a direction perpendicular to a light entrance surface thereof. The front surface of the light guide plate is a light exit surface through which the incident light from the light emitting source exits. The rear surface of the light guide plate is a scattering surface that scatters the incident light from the light emitting surface. The scattering surface has microscopic perforations. The incident light from the light emitting source diffusely reflects off the scattering surface and exits from the light exit surface.
Patent Document 1: Japanese Published Patent Application No. 2007-317466

### Problem to be Solved by the Invention

Each of the above planar light sources has microscopic perforations in the scattering surface at different intervals according to a distance from the light emitting source so as to achieve even brightness distribution on the light exit surface. However, to make the brightness distribution on the light exit surface absolutely even is very difficult. The brightness distribution on the light exit surface is more or less biased. For example, brightness in an edge area of the light guide plate away from the light emitting source is low and in the other edge area is high. If a number of the planar light sources having such a configuration are arranged in a grid, the high brightness areas on the light exit surfaces of the planar light sources are horizontally aligned. When an entire screen is observed, a plurality of bright bands may be recognized. This reduces display quality of the display device.

### DISCLOSURE OF THE PRESENT INVENTION

The present invention was made in view of the foregoing circumstances. An object of the present invention is to provide a lighting device, a display device and a television receiver all configured to provide display with high quality.

### Problem to be Solved by the Invention

To solve the above problem, a lighting device of the present invention includes a plurality of planar light sources arranged along a planar direction. Each planar light source includes a light exit surface having a high brightness area and a low brightness area. The planar light sources are arranged such that the high brightness areas and the low brightness areas of the adjacent planar light sources are in line.
With this configuration, the high brightness areas are not in line and thus a bright band does not appear. As a result, high display quality can be achieved.

Each of the planar light sources may have directivity with the high brightness area and the low brightness area arranged in the same line. The planar light sources may be arranged such that the adjacent planar light sources are in opposite orientations.
When the high brightness area and the low brightness area are arranged in the same line, the planar light sources may be arranged in opposite orientations. In this case, the high brightness areas and the low brightness areas on the light exit surfaces of the adjacent planar light sources are easily arranged in the same line.

Each of the planar light sources may include a light guide member with a light scattering surface on one of main surfaces and a light exit surface on another main surface. The light guide member may be configured to reflect light that enters the light guide member from a flat side surface such that the light exits from the light exit surface.

The light scattering surface may have a plurality of perforations that extend in a direction perpendicular to a light axis of incident light to the light guide member.
The perforations may be formed such that a density thereof is different according to a distance from a point of incidence to the light guide member.

The light guide member may have a light source holding space in a side-edge portion and a light emitting source may be held in the light source holding space.
The light emitting source may be an LED.

The planar light sources may include at least first planar light source and second planar light source. The first planar light source may include the high brightness area and the low brightness area arranged in a first direction. The second planar light source may include the high brightness area and the low brightness area in a second direction opposite from the first direction. The first planar light source and the second planar light source are adjacently arranged in the same orientation. In this case, the high brightness areas and the low brightness areas on the light exit surfaces of the adjacent planar light sources are easily arranged in the same line.

Each of the planar light sources may include a light guide member with a light scattering surface on one of main surfaces and a light exit surface on another main surface. The light guide member may be configured to reflect light that enters the light guide member from a flat side surface such that the light exits from the light exit surface.

The light scattering surface may have a plurality of perforations that extend in a direction perpendicular to a light axis of incident light to the light guide member.
The perforations may be formed such that a density thereof is different according to a distance from a point of incidence to the light guide member.

The light guide member may have a light source holding space in a side-edge portion and a light emitting source may be held in the light source holding space.
The light emitting source may be an LED.

The light exit surface of each planar light source may have asperities. The planar light source may have a biased brightness distribution achieved by forming different shapes of the asperities on the light exit surface.
The high brightness areas and the low brightness areas on the light exit surfaces of the planar light sources may be arranged along an arrangement direction of the planar light sources at equal intervals.
Each planar light source may have a rectangular shape and the planar light sources are arranged in a grid.

A display device of the present invention includes the lighting device and a display panel configured to provide display using light from the lighting device.
The display panel may be a liquid crystal panel including liquid crystals.
A television receiver of the present invention includes the display device.

### Effect of the Invention

According to the present invention, a lighting device, a display device and a television receiver all configured to provide display with high quality.

### BRIEF DESCRIPTION OF THE DRAWINGS

[FIG. 1] is an exploded perspective view illustrating a general construction of a television receiver according to the first embodiment;
[FIG. 2] is an exploded perspective view illustrating a general construction of a liquid crystal display device;
[FIG. 3] is a cross-sectional view of a lower-edge portion along line A-A in FIG. 2;
[FIG. 4] is a cross-sectional view of a middle portion along line A-A in FIG. 2;
[FIG. 5] is a cross-sectional view of an upper-edge portion along line A-A in FIG. 2;
[FIG. 6] is a cross-sectional view of a lower-edge portion along line B-B in FIG. 2;
[FIG. 7] is a cross-sectional view of a middle portion along line B-B in FIG. 2;
[FIG. 8] is a cross-sectional view of an upper-edge portion along line B-B in FIG. 2;
[FIG. 9] is a front view of a light guide plate;
[FIG. 10] is a rear view of a light guide plate;
[FIG. 11] is a front view illustrating a layout of light guide plates;
[FIG. 12] is a schematic view illustrating bright areas and dark areas of planar light sources;
[FIG. 13] is a rear view of a light guide plate according to the second embodiment;
[FIG. 14] is a front view illustrating a layout of light guide plates; and
[FIG. 15] is a schematic view illustrating bright areas and dark areas of planar light sources.

### Explanation of Symbols

[0018] TV: Television receiver
10: Liquid crystal display device (Display device)
11: Liquid crystal panel (Display panel)
20, 70: Backlight unit (Lighting device)
21, 71A, 71B: Planar light source
23: LED (Light emitting source)
33, 72A, 72B: Unit light guide member (Light guide member)
35: Light source holding space
48, 73: Light scattering surface
43: Light exit surface

### BEST MODE FOR CARRYING OUT THE INVENTION

### <First embodiment>

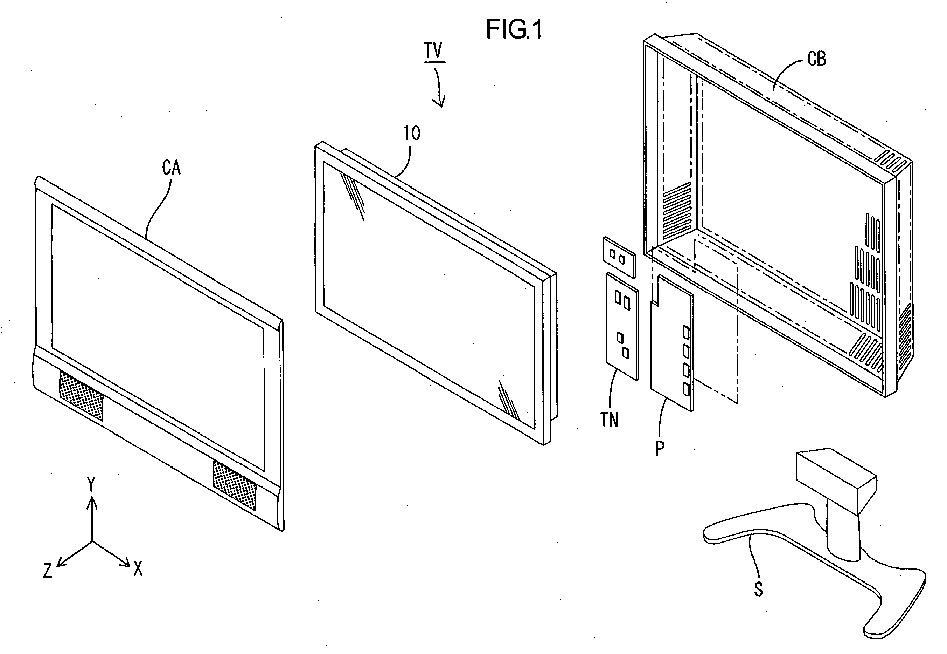

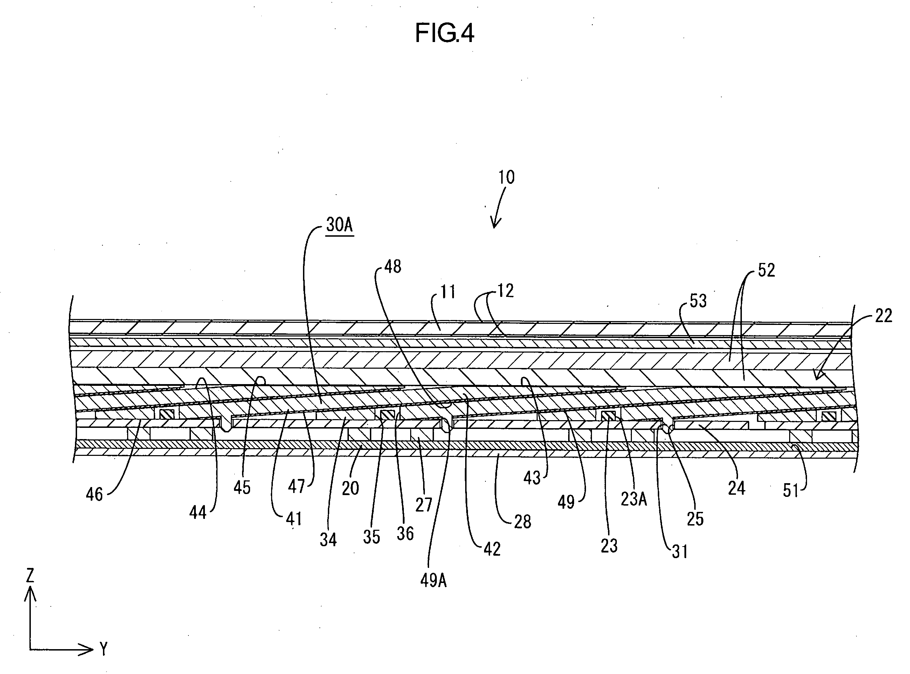

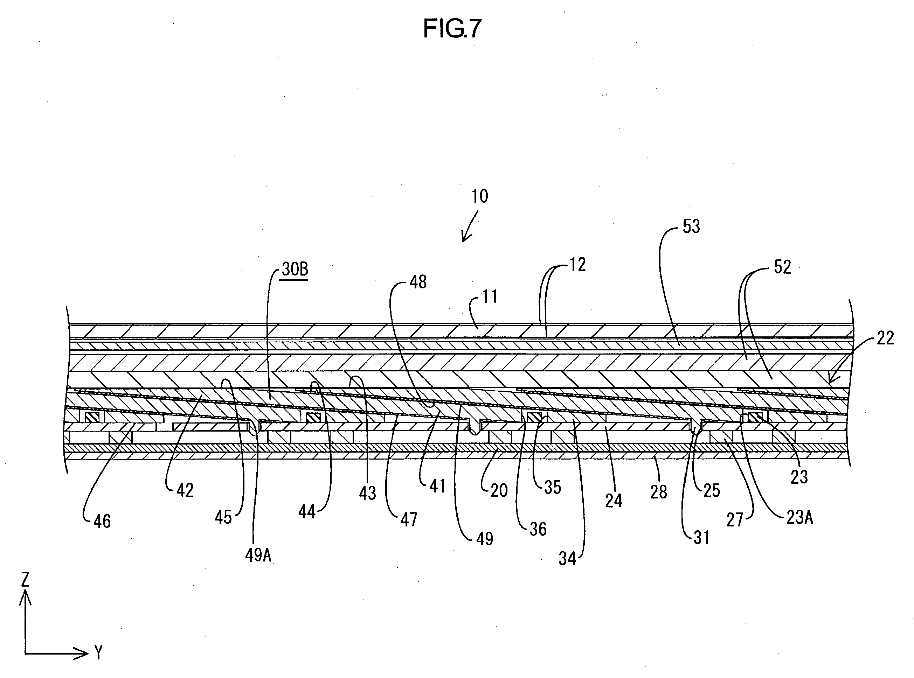

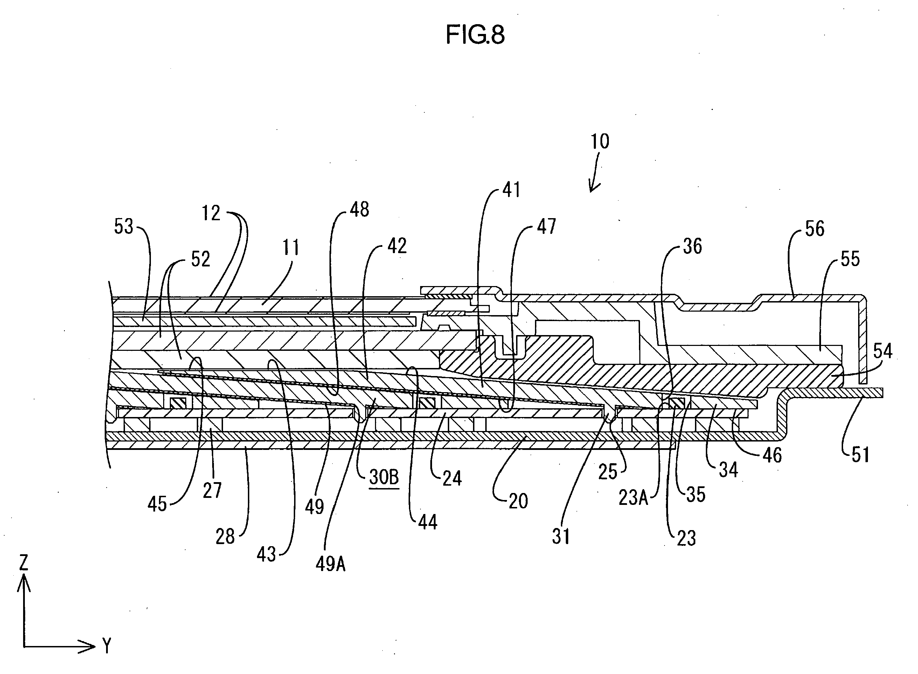

The first embodiment of the present invention will be explained with reference to FIGS. 1 to 12.
In this embodiment, a television receiver TV including a liquid crystal display device 10 (a display device) will be explained. As illustrated in FIG. 1, the television receiver TV includes the liquid crystal display device 10, cabinets CA and CB, a power source P, and a tuner TN. The cabinets CA and CB sandwich the liquid crystal display device 10 therebetween. The tuner TN receives TV broadcasting. The liquid crystal display device 10 is held in a vertical position such that a display surface thereof is along the vertical direction and housed in the cabinets CA and CB. In descriptions below, the lower left side (the front side of the television receiver TV or the display side) of FIG. 1 is referred to as a front-surface side and the upper right side of FIG. 1 is referred to as a rear-surface side. The X direction in each drawing corresponds to the longitudinal direction of the liquid crystal display device 10. The Y direction corresponds to the short-side direction of the liquid crystal display device 10 (a positive side is an upper side and a negative side is a lower side). The Z direction corresponds to the front-to-rear direction of the liquid crystal display device 10 (a positive side is the front-surface side and a negative side is the rear-surface side).

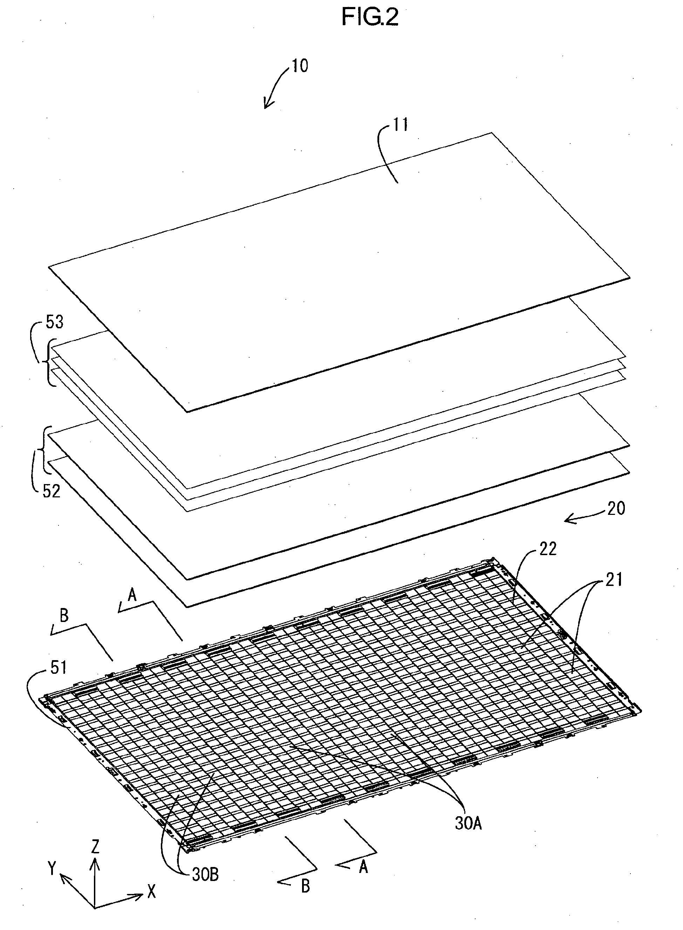

The liquid crystal display device 10 has a landscape rectangular overall shape when viewed from the front or the rear. As illustrated in FIG. 2, the liquid crystal display device 10 includes a liquid crystal panel 11 (a display panel) which is configured to display images and a backlight unit 20 (a lighting device) which is an external light source for illuminating the liquid crystal panel 11. The liquid crystal panel 11 and the backlight unit 20 are held together by holding members including a bezel 56.

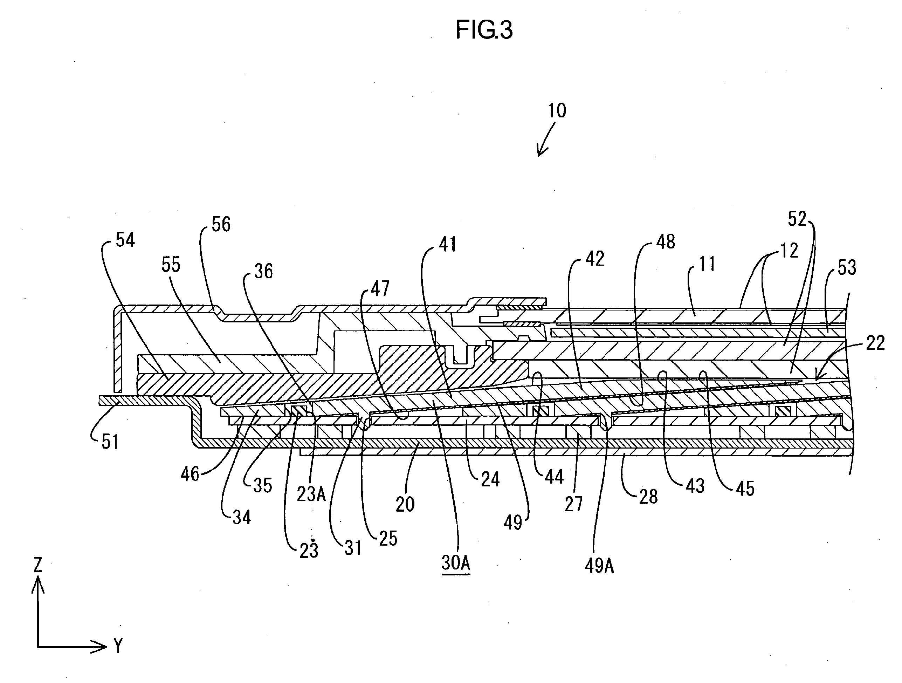

The liquid crystal panel 11 includes a pair of transparent glass substrates (capable of light transmission) and a liquid crystal layer (not shown). Each glass substrate has a landscape rectangular shape. The liquid crystal layer is provided between the substrates. Optical characteristics of the liquid crystal layer change according to application of voltage. Polarizing plates 12 are attached to the front and the rear surfaces of the liquid crystal panel 11 (see FIG. 3).

The backlight unit 20 is a so-called direct backlight unit 20 and arranged closely behind the liquid crystal panel 11. The backlight unit 20 includes a light source unit 22 in which a plurality of planar light sources 21 are arranged along the planar direction.

The light source unit 22 includes a chassis 51 formed in a shallow-tray-like shape recessed toward the rear-surface side (an opposite side from the liquid crystal panel 11). The chassis 51 is made of metal. A plurality of the LED boards 24 on which surface-mount-type LEDs 23 (light emitting sources) are mounted are arranged on a bottom surface (i.e., the front surface) of the chassis 51.

Each LED board 24 is made of synthetic resin and the surfaces thereof are in white that provides high light reflectivity. The LED board 24 is formed in a landscape rectangular when viewed from the front or the rear. The LED boards 24 are arranged on the bottom surface of the chassis 51 such that the longitudinal direction thereof matches the longitudinal direction of the chassis 51. About the entire bottom surface of the chassis 51 is covered with the plurality of the LED boards 24.

Wiring patterns that are metal films are formed on each LED board 24 and the LEDs 23 are mounted in predetermined locations on the LED board 24.
The LEDs 23 are side-emitting LEDs. Each LED 23 has a block-like overall shape and a side surface thereof is a light emitting surface 23A. The LEDs 23 are arranged such that the longitudinal direction thereof matches the longitudinal direction of the LED boards 24 and soldered to the LED boards 24. The light emitting surface 23A of each LED 23 is set substantially perpendicular to the short side of the LED board 24. A light axis is substantially parallel to the short side of the LED board 24. Each LED 23 includes three different kinds of the LED chips (not shown) with different main emission wavelengths. Specifically, each LED chip emits a single color of light of red (R) , green (G) or blue (B).

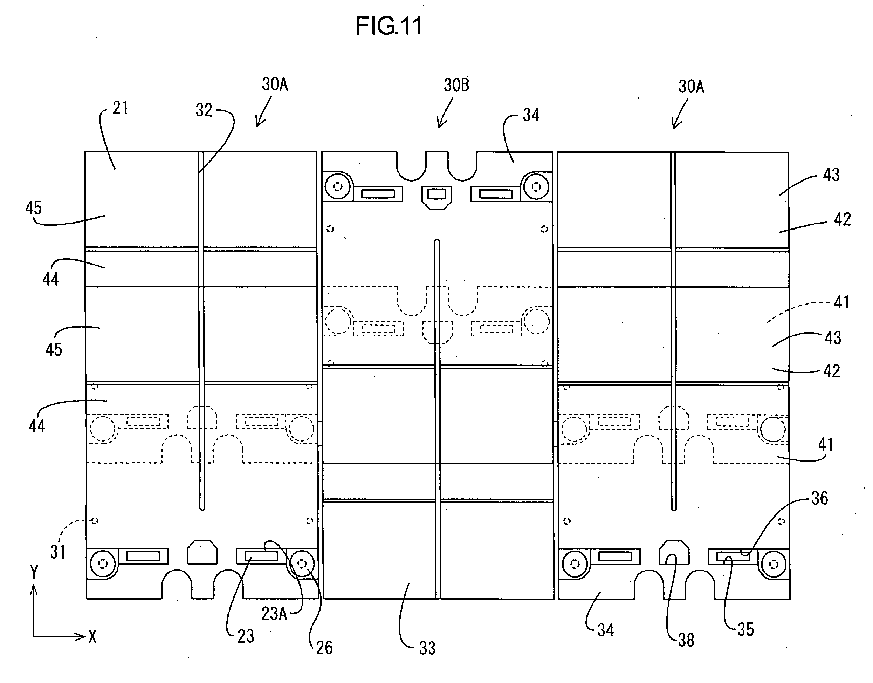

The LEDs 23 are arranged on each LED board 24 at predetermined intervals (same as intervals between light source holding spaces of the light guide plates 30 arranged in a grid, which will be explained later) along the long side and the short side of the LED board 24. The LEDs 23 are arranged such that each two of them adjacent to each other in the longitudinal direction of the LED board 24 are displaced from each other in the short-side direction of the LED board 24. Namely, pairs of the LEDs 23 are arranged alternately (i.e., in a zigzag manner) on either end of the long dimension of the LED boards 24 (see FIG. 11). The LED boards 24 are electrically connected to a control board (not shown) configured to drive the LEDs 23.

Each LED board 24 has positioning holes 25 in which positioning pins 31 of light guide plates 30, which will be explained later, are fitted (see FIGS. 3 to 8). It also has clip insertion holes (not shown) in which clips 26 for fixing the light guide plates 30 to the LED board 24 are inserted (see FIG. 11). The LED boards 24 are fixed to the bottom plate of the chassis 51 with screws, which are not shown.

Heat transfer members 27 are provided between the bottom surface (i.e., the front surface) of the chassis 51 and the LED boards 24. Each heat transfer member 27 is made of synthetic resin or metal having high heat conductivity. A heat sink 28 is attached to the outer surface (i.e., the rear surface) of the chassis 51. The heat sink 28 is made of synthetic resin or metal having high heat conductivity.

A plurality of the light guide plates 30 are arranged on the front surface of each LED board 24 so as to cover the front surface. Each light guide plate 30 is made of nearly transparent synthetic resin (highly capable of light transmission), for instance, polycarbonate. The light guide plate 30 has a refraction index significantly higher than that of air and a rectangular overall shape when viewed from the front or the rear. The light guide plate 30 is arranged on the LED board 24 such that the longitudinal direction thereof matches the light axis of the LED 23.

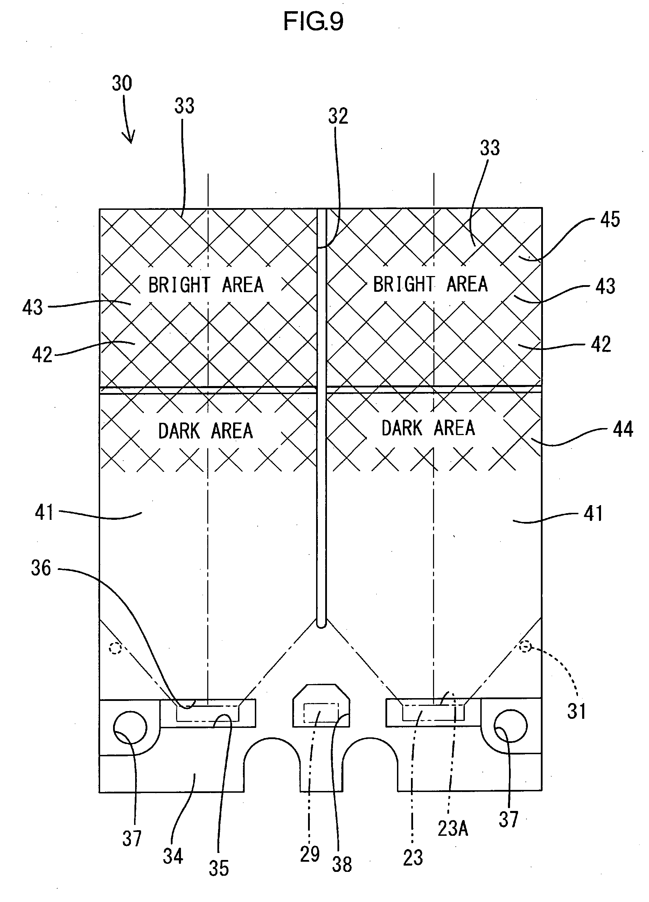

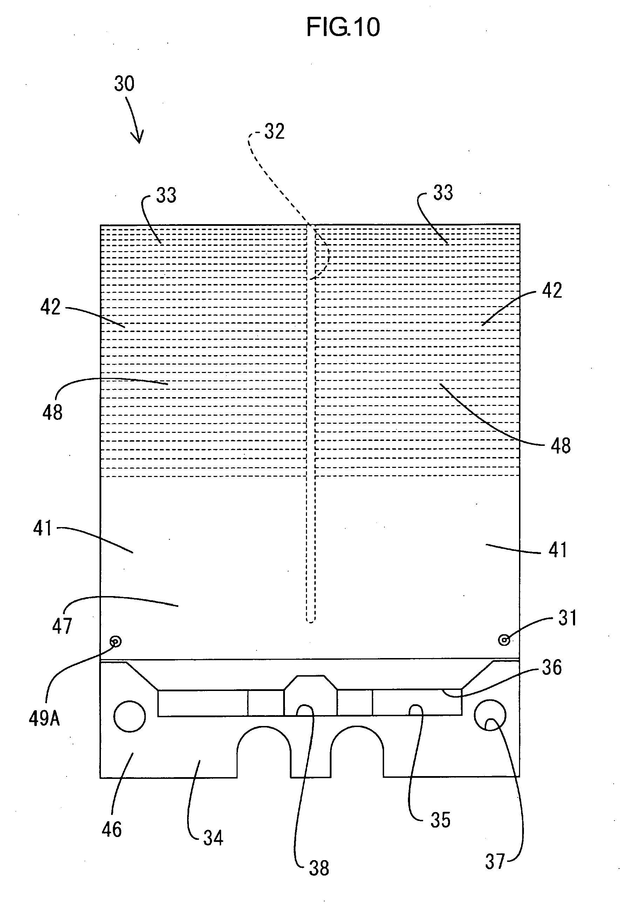

As illustrated in FIGS. 9 and 10, each light guide plate 30 has a slit 32 formed so as to divide the short dimension of the light guide plate 30 in half (i.e., the slit 32 is located at the center of the short dimension of the light guide plate 30). The slit 32 runs from one end of the long dimension of the light guide plate 30 straight toward the other end. One end of the slit 32 is open and the other end is closed.

Each light guide plate 30 includes unit light guide members 33 (light guide members) on respective sides of the slit 32. The light guide members 33 are optically independent from each other. Peripheral surfaces of the light guide plate 30 are substantially perpendicular to the front surface of the LED board 24.

A part of each light guide plate 30 close to the other end (a part in which the slit 32 is not formed) is a mounting portion 34 mounted to the LED board 24. In the mounting portion 34, light source holding spaces 35 for holding the LEDs 23 are provided. Each light source holding space 35 runs through the light guide plate 30 in the thickness direction and long in the short-side direction of the light guide plate 30. A surface that faces the light exiting surface of the LED 23 among inner peripheral surfaces is a light entrance surface 36 through which light from the LED 23 enters.

Each light guide plate 30 has a pair of the light source holding spaces 35 in locations predetermined distance away from each other in the short-side direction thereof. Each light source holding space 35 is formed around the middle of the short dimension of the corresponding unit light guide member 33. Namely, it is formed around the midpoint between the slit 32 and the either end of the short dimension (or the long side) of the light guide plate 30. Each light source holding space 35 is formed in a location such that rays of light emitted from the LED 23 do not enter the adjacent unit light guide member 33.

The mounting portion has clip insertion holes 37 in which the clips 26 for mounting the light guide plate 30 to the LED board 24 are inserted. The clip insertion holes 37 are formed at ends of the mounting portion 34 in the width direction of the mounting portion 34 (ends of the short dimension of the light guide plate 30). The clips 26 passed through the clip insertion holes 37 are inserted in the clip insertion holes of the LED board 24. As a result, the light guide plate 30 is held to the LED board 24 in an initial condition in which it is mounted.

Each mounting portion 34 has a sensor holding space 38 for holding a photo sensor 29 mounted on the LED board 24. The sensor mounting space 38 is provided between the light source holding spaces 35 (on an extended line of the slit 32).

Each unit light guide member 33 has a light guide portion 41 and a light exit portion 42. The light guide portion 41 guides light from the LED 23 such that the light does not exit to outside. The light guided by the light guide portion 41 exits from the light exit portion 42. A part of the unit light guide member 33 on the light source holding space 35 side is the light guide portion 41 and the other part is the light exit portion 42. Light emitted from the LED 23 is guided to the light exit portion 42 with total reflection that occurs repeatedly. It exits from a light exit surface 43 of the light exit portion 42. The unit light guide member 33 and the LED 23 form the planar light source 21. Each unit light member 33 has a positioning pin 31 for positioning the light guide plate 30 to the LED board 24 in a location close to the mounting portion 34. When the positioning pins 31 are inserted in the positioning holes 25 of the LED board 24, the light guide plate 30 is positioned to the LED board 24.

The front surface of each light guide plate 30 is a front sloped surface 44 that is gentle sloped from an edge of the mounting portion 34 to the light exit portion toward the front-surface side (so as to gradually leave away from the front surface of the LED board 24). A surface located between the front sloped surface 44 and the front end of the light exit portion 42 is a front flat surface 45 that is substantially parallel to the front surface of the LED board 24 (see FIGS. 3 to 8). The front surfaces of each light guide plate 30 are smooth surfaces without asperities in the entire area thereof. The front surface of each light exit portion 42 of the front surfaces of each light guide plate 30 is the light exit surface 43 of each unit light guide member 33. In FIG. 9, shaded areas correspond to the light exit surfaces 43.

Each light exit surface 43 of the unit light guide member 33 has a rectangular shape that is slightly long in the longitudinal direction of the light guide plate 30 when viewed from the front or the rear. Each light exit surface 43 corresponds to an area starting at the end of the front sloped surface 44 and continuing to the entire front flat surface 45. A large part of the light exit surface 43 is the front flat surface 45 (a large part of the light exit surface 43 on a side away from the light exit portion 42). The mounting portion 34 and the light guide portions 41 of each light guide plate 30 are non-luminance portions.

The rear surfaces of each light guide plate 30 include a rear flat surface 46 and a rear sloped surface 47 (see FIGS. 3 to 8). The rear flat surface 46 is a surface of the mounting portion 34 that is substantially parallel to the front surface of the LED board 24. The rear sloped surface 47 is a surface of a part of the light guide plate 30 starting from the end of the rear flat surface 46 and continuing to the front end of the light exit portion 42. It is gradually sloped toward the front (so as to gradually leave away from the front surface of the LED board 24) (see FIGS. 3 to 8).

The rear surface of the light exit portion 42 of the rear surfaces of the light guide plate 30 (about the entire area of the rear surface of the unit light guide member 33 overlapping the light exit surface 43) is a light scattering surface 48 (see FIG. 10). The light scattering surface 48 is configured to scatter light. Light from the LED 23 enters the unit light guide member 33 and scatters through the light scattering surface 48. Some rays of the scattered light strike the light exit surface 43 at angles smaller than a critical angle. Total reflection does not occur at the light exit surface 43 and the rays of light exit from the light exit surface 43.

The scattering surface 48 of each light guide plate 30 included in the backlight unit 20 has microscopic asperities in the entire area thereof. Specifically, the scattering surface 48 has a large number of perforations that extend linearly along the short-side direction of the light guide plate 30 (i.e., perpendicular to a direction from the LED 23 to the unit light guide member 33). The perforations in the light scattering surface 48 differ in density according to a distance from a point of incidence to the unit light guide member 72 (i.e., the light entrance surface 36). Intervals between lines of the perforations are large on the light guide portion 41 side and small on the front end of the light exit portion 42. They gradually decrease from the light guide portion 41 side to the front end of the light exit portion 42. Namely, the density is lower on the side closer to the LED 23 and higher on the side father from the LED 23. In each light guide plate 30, a level of scattering (or a degree of scattering) varies according to the distance from the LED 23. The light guide plate 30 has light scattering characteristics to scatter light at a higher level in the area closer to the LED 23 than the area farther from the LED 23. With such light scattering characteristics, a difference in brightness between the area of the light exit surface 43 closer to the LED 23 and the area farther from the LED 23 can be made as small as possible to achieve uniform brightness. However, the brightness on the light exit surface 43 of the planar light source 21 slightly varies according to the distance from the LED 23. Specifically, the brightness in the area farther from the LED 23 is slightly higher than that in the area closer to the LED 23. The brightness of each planar light source 21 is higher on the side away from the LED 23. The brightness distributions of all planar light sources 21 are biased toward the same side. The front sloped surface 44 of each light exit surface 43 of each planar light source 21 is a low brightness area (a dark area) in which the brightness is low. Around the central area of the front flat surface 45 (the central area with respect to the light axis of the LED 23) is a high brightness area (a bright area) in which the brightness is high. About the entire area of the rear surface of each light guide plate 30 except for the light scattering surface 48 is a smooth surface without asperities.

The reflection sheet 49 is attached to the rear surface of each light guide plate 30. The reflection sheet 49 is made of synthetic resin in white that provides high light reflectivity. The reflection sheet 49 is arranged so as to cover about an entire overlapping area of the rear surface of the light guide plate 30 in which the light guide portion 41 and the light exit portion 42 overlap to each other. The reflection sheet 49 has fixing holes 49A. The reflection sheet is fixed to the light guide plate 30 with the positioning pins 31 of the light guide plate 30 fitted in the respective fixing holes 49A. The reflection sheet 49 restricts light from leaking from the rear surface of the light guide plate 30 and reflects light scattered through the light scattering surface 48 toward the light exit surface 43.

The thickness of the mounting portion 34 of each light guide plate 30 gradually increases on the light guide portion 41 side. The thickness of the part of the light guide plate 30 excluding the part from the end of the light guide portion 41 to the light exit portion 42 including the front flat surface 45 is substantially constant. The thickness of the light exit portion 42 including the front flat surface 45 gradually decreases toward the distal end. The light guide plate 30 is fixed to the LED board 24 with the rear surface of the mounting portion 34 in contact with the front surface of the LED board 24. The light guide plate 30 is held in a cantilever manner with the distal end part separated from the LED board 24.

The light guide plates 30 are arranged on the front surface of the LED board 24 (see FIG. 11) such that the light exit surfaces 43 of the unit light guide members 33 (the light exit surfaces 43 of the planar light sources 21) are in a matrix along the planar direction (substantially parallel to the front surface of the LED board 24).

The light guide plates 30 are arranged in line with ends of the long dimensions thereof overlap each other on one side. Lines of the light guide plates 30 are away from each other in the short-side direction with predetermined intervals (see the drawings). In each line of the light guide plates 30, the light exit portion 42 of the light guide plate 30 overlaps the non-luminance portion (a portion from the mounting portion 34 to the light guide portion 41) of another from the front-surface side. The light exit surfaces 43 of the light guide plates 30 are arranged in lines along the short-side direction of the LED board 24 substantially without gaps.

The light guide plates 30 include top-up light guide plates 30A and top-down light guide plates 30B. The top-up light guide plates 30A are arranged with the mounting portions 34 thereof on the lower side (the negative side in the Y direction in the drawings) and the light exit portions 42 thereof on the upper side (the positive side in the Y direction in the drawings). The top-down light guide plates 30B are arranged with the light exit portions 42 thereof on the lower side (the negative side in the Y direction in the drawings) and the mounting portions 34 thereof on the upper side (the positive side in the Y direction in the drawings). Namely, the planar light sources 21 (some of the planar light sources 21) included in the top-up light guide plates 30A and the planar light sources 21 (other planar light sources 21) included in the top-down light guide plates 30B are arranged with bias directions of brightness distributions different from each other. Specifically, the planar light sources 21 in the top-up light guide plates 30A and the planar light sources 21 in the top-down light guide plates 30B are arranged such that directions in which rays of light from the LEDs 23 enter the light guide plates are opposite from each other.

The top-up light guide plates 30A and the top-down light guide plates 30B are arranged with predetermined gaps (in the same size as the slits 32) which separate them in the longitudinal direction of the LED board 24 such that the light guide plates 30 do not overlap one another. The top-up light guide plates 30A and the top-down light guide plates 30B are arranged alternately in the longitudinal direction of the LED board 24 (in every other line). The top-up light guide plates 30A and the top-down light guide plates 30B are arranged with the ends thereof located at the ends of the long dimension of the LED board 24 are aligned. The planar light sources 21 are arranged in a grid.

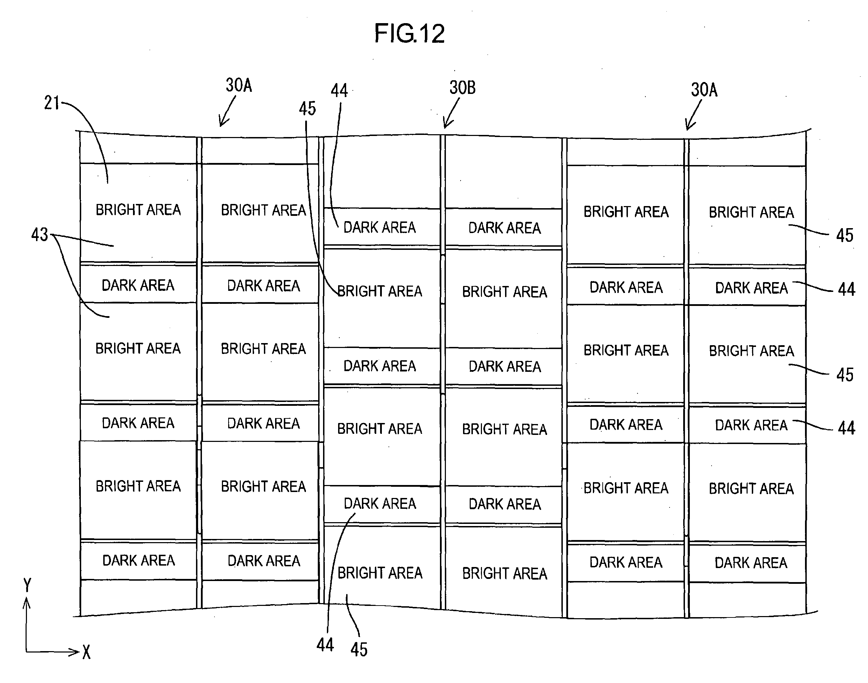

High brightness areas (bright areas) and low brightness areas (dark areas) of the top-up light guide plates 30A and the top-down light guide plates 30B are alternately arranged at regular intervals (see FIG. 12). They are arranged in lines along the longitudinal direction and the short-side direction of the LED board 24 (the arrangement directions of the planar light sources 21). Specifically, the bright areas of two light exit surfaces 43 and the dark areas of two exit surfaces 43 are alternately arranged in lines along the longitudinal direction of the LED board 24. The bright areas and the dark areas of the light exit surfaces 43 are alternately arranged in lines along the short-side direction of the LED board 24.

The planar light sources 21 are arranged such that the light exit surfaces 43 cover about the entire front surface of the LED board 24. The light exit surfaces 43 of the planar light sources 21 form the light exit surface 43 of the light source unit 22.

The backlight unit 20 includes a diffuser 52 and an optical sheet 53. The diffuser 52 includes two plates. Each plate includes a transparent resin base member having a predetermined thickness and diffusing particles that are scattered in the base member. It is configured to diffuse light that passes therethrough. Two plates having the similar thicknesses are layered and arranged close to the light exit surfaces 43 of the planar light source 21 on the light exit surface 43 side of the light source unit 22 (on the front surface side of the chassis 51). The optical sheet 53 includes a diffuser sheet, a lens sheet and a reflection-type polarizing sheet layered in this order from the rear-surface side (see FIG. 2). The optical sheet 53 is arranged on the front-surface side of the diffuser 52 (on the liquid crystal panel side).

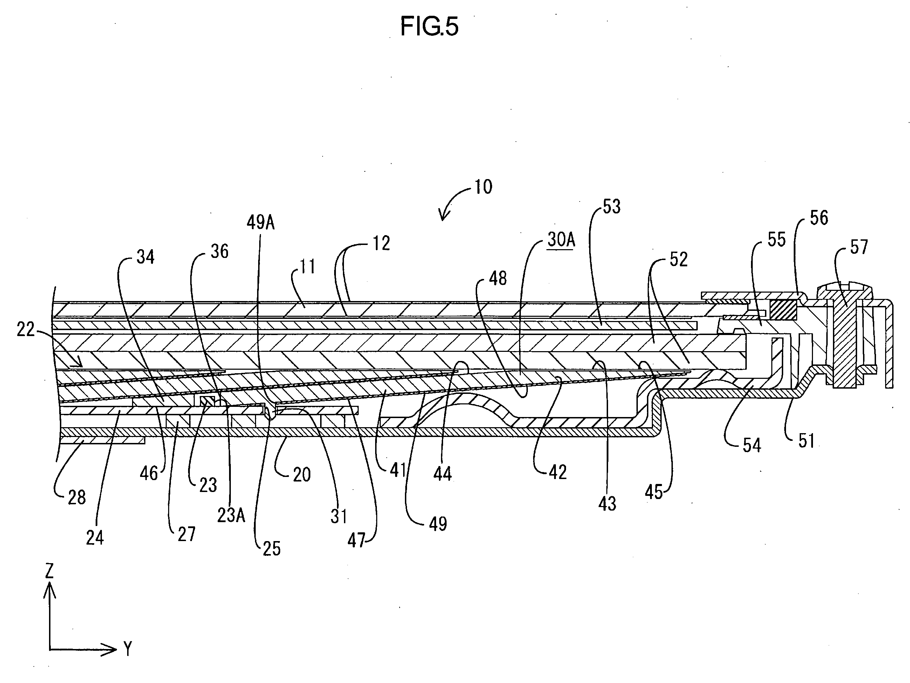

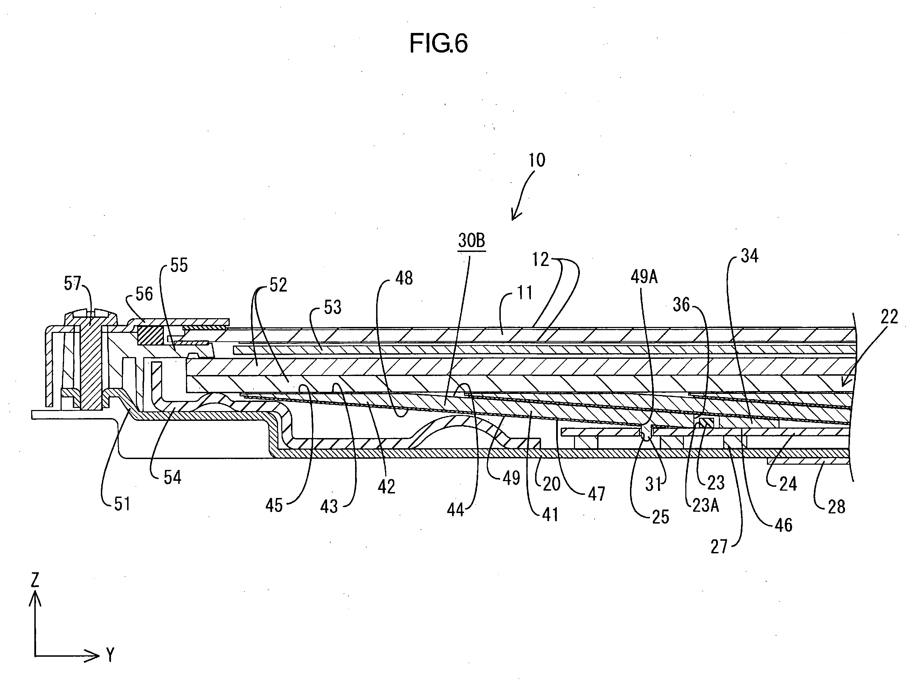

A holding member 54 is attached to outer edge areas of the chassis 51. The holding member 54 holds entire outer edge areas of the diffuser 52 from the rear-surface side. A frame 55 is provided between the outer edge areas of the diffuser 52 and the outer edges of the liquid crystal panel 11. The bezel 56 is arranged on the front surface of the outer edge areas of the liquid crystal panel 11. The outer edge areas of the diffuser 52 are sandwiched between the holding member 54 and the frame 55. The outer edge areas of the liquid crystal panel 11 are sandwiched between the bezel 56 and the frame 55. The optical sheet 53 is sandwiched between the diffuser 52 and the liquid crystal panel 11. The liquid crystal display device 10 is assembled with the bezel 56, the frame 55 and the chassis 51 fixed together with screws 57 at multiple locations (see FIGS. 5 and 6). As illustrated in FIGS. 3 to 8, the support member 54 covers the front surfaces of the mounting portions 34 and the light guide portions 41 at the lower edges of the top-up light guide plates 30A and the upper edges of the top-down light guide plates 30B. As illustrated in FIGS. 5 and 6, the support member 54 is arranged along the bottom plate of the chassis 51 at the upper edges of the top-up light guide plates 30A and the lower edges of the top-down light guide plates 30B so as to support the top ends of the light guide plates 30 and the diffuser 52 from the rear-surface side.

Next, functions and effects of the first embodiment in the above configuration will be explained.
In this embodiment, the high brightness areas and the low brightness areas of the light exit surfaces 43 of the planar light sources 21 are arranged in lines. Namely, the high brightness areas are not arranged in lines and thus bright bands do not appear. Therefore, high display quality can be achieved.

### <Second embodiment>

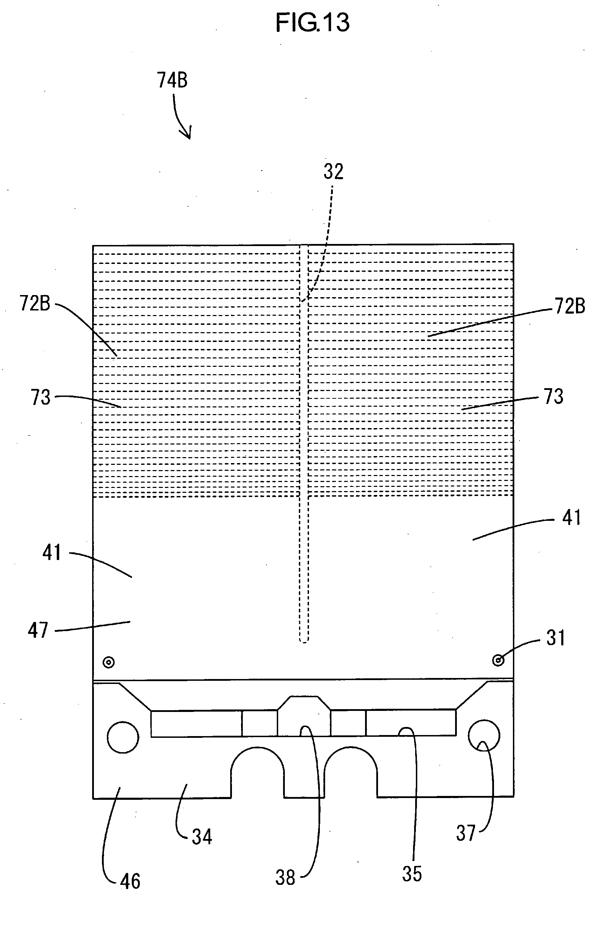

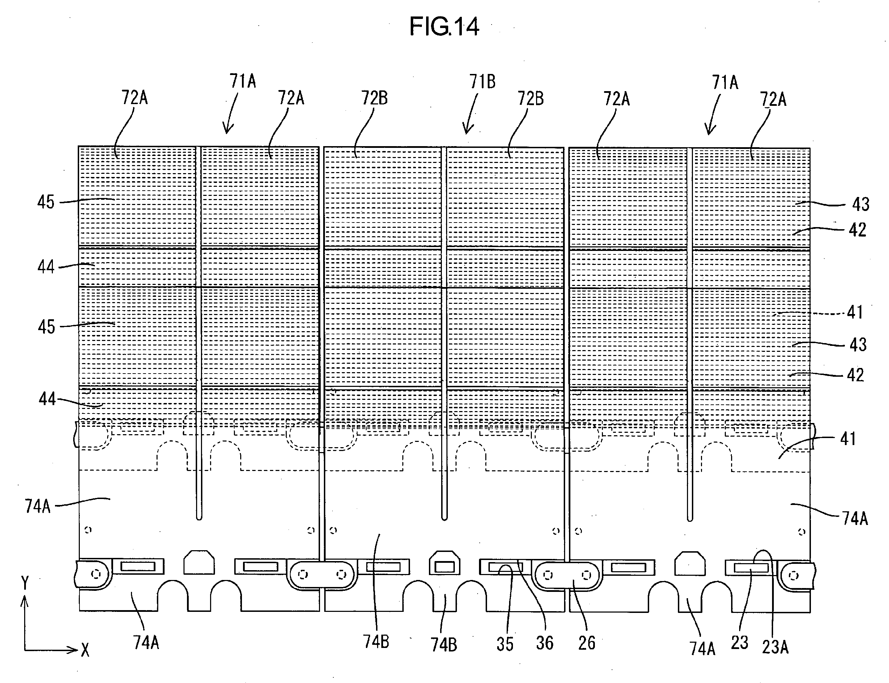

Next, the a television receiver TV of the second embodiment of the present invention will be explained with reference to FIGS. 13 to 15.
The television receiver TV of this embodiment includes a plurality of planar light sources 71. The planar light sources 71 include different kinds of planar light sources 71. Bias directions of brightness distributions of light exit surfaces 43 are different. The planar light sources 71 are arranged in the same direction. These configurations are different from the first embodiment. The same parts as those in the first embodiment will be indicated by the same symbols and will not be explained.

Each planar light source 71 of this embodiment includes a unit light guide member 72 and the LEDs 23, similar to the first embodiment. The unit light guide member 72 has a scattering surface 73, which scatters light, on the rear surface (the surface opposite from the light exit surface 43). The scattering surface 73 of each light guide member 72 included in a backlight unit 70 has microscopic asperities (a number of perforations that extend linearly in a short-side direction of a light guide plate 74), similar to the first embodiment.

The planar light sources 71 include two kinds of planar light sources (the first kind planar light sources 71A and the second kind planar light sources 71B). Bias directions of brightness distributions of the two kinds of planar light sources are different from each other.

The unit light guide member 72 of the first kind of each planar light source 71A (referred to as the first kind light guide member 72A) has a number of perforations formed in the scattering surface 73. Intervals between lines of the perforations gradually become smaller from the light guide portion 41 side to the front-end side of the light exit portion 42. Namely, a density of the lines of the perforations on a side closer to the LED 23 is lower and on a side farther from the LED 23 is higher (see FIG. 10). The unit light guide member 72 of each second kind planar light source 71B (referred to as the second kind light guide member 72B) has a number of perforations formed in the scattering surface 73. Contrary to the first kind light guide member 72A, intervals between lines of the perforations gradually become larger from the light guide portion 41 side to the front-end side of the light exit portion 42. Namely, a density of the lines of the perforations on a side closer to the LED 23 is higher and on a side farther from the LED 23 is lower (see FIG. 13).

In each first kind light guide member 72A and each second kind light guide member 72B, a level of scattering (or a degree of scattering) varies according to the distance from the LED 23. The first kind light guide member 72A has light scattering characteristics to scatter light at a higher level in the area farther from the LED 23 than the area closer to the LED 23. The second kind light guide member 72B has light scattering characteristics to scatter light at a higher level in the area closer to the LED 23 than the area farther from the LED 23.

The brightness on the light exit surface 43 of each planar light source 71 varies according to the distance from the LED 23, similar to the first embodiment. The brightness on the light exit surface 43 of each first kind planar light source 71A is slightly higher on the side farther from the LED 23 than on the side closer to the LED 23. The brightness on the light exit surface 43 of each second kind planar light source 71B is slightly higher on the side closer to the LED 23 than on the side farther from the LED 23. Namely, the first kind planar light 71A is higher in brightness on the light exit surface 43 on the side farther from the LED 23, and the second kind planar light 71B is higher in brightness on the light exit surface 43 on the side closer to the LED 23. The bias directions of the brightness distributions of the first kind planar light source 71A and the second kind planar light source 71B are opposite from each other. The front sloped surface 44 of the light exit surface 43 of the first kind planar light source 71A is a low brightness area (a dark area) in which the brightness is low. The middle area of the front flat surface 45 (a middle area of a dimension that measures along the light axis of the LED 23) is a high brightness area (a bright area) in which the brightness is high. The front sloped surface 44 of the light exit surface 43 of the second kind planar light source 71B is a high brightness area (a bright area) in which the brightness is high. The front-end area of the front flat surface 45 is a low brightness area (a dark area).

The light guide plates 74 include the first kind light guide plates 74A and the second kind light guide plates 74B. Each first kind light guide plate 74A includes two first kind light guide members 72A. Each second kind light guide plates 74B includes two second kind light guide members 72B. The light guide plates 74 are arranged such that the light exit surfaces 43 of the unit light guide members 72 (the light exit surfaces 43 of the planar light sources 71) are arranged along the planar direction (substantially parallel to the front surface of the LED board 24) , similar to the first embodiment. The light guide plates 74 are arranged in line such that ends of the long dimensions thereof overlap one another. The light guide plates 74 are arranged such that lines of the light guide plates 74 are away from each other in the short-side direction with predetermined gaps.

The light guide plates 74 are arranged in top-up positions with the mounting portions 34 on the lower side (the negative side in the Y direction in the drawings) and the light exit portions 42 on the upper side (the positive side in the Y direction in the drawings). The planar light sources 71A and 72B are arranged such that the incident directions in which rays of light from the LEDs 23 enter the respective light guide members 72A and 72B are in the same direction.

The light guide plates 74 include the first kind light guide plates 74A and the second kind light guide plates 74B. The first kind light guide plates 74A are arranged along the short-side direction of the LED board 24. The second kind light guide plates 74B are arranged along the short-side direction of the LED board 24. The first kind light guide plate 74A and the second kind light guide plates 74B are arranged away from each other in the longitudinal direction of the LED board 24 with predetermined gaps (in the same size as the slits 32) such that the light guide plates 74 do not overlap one another. The first kind light guide plates 74A and the second kind light guide plates 74B are alternately arranged in the longitudinal direction of the LED board 24 (every other lines). The first kink light guide plates 74A and the second kind light guide plates 74B are arranged such that the ends of the long dimensions of the light guide plates 74A and 74B are aligned. Every two of the first kind planar light sources 71A and the second kind planar light sources 71B are alternately arranged in the longitudinal direction of the LED board 24.

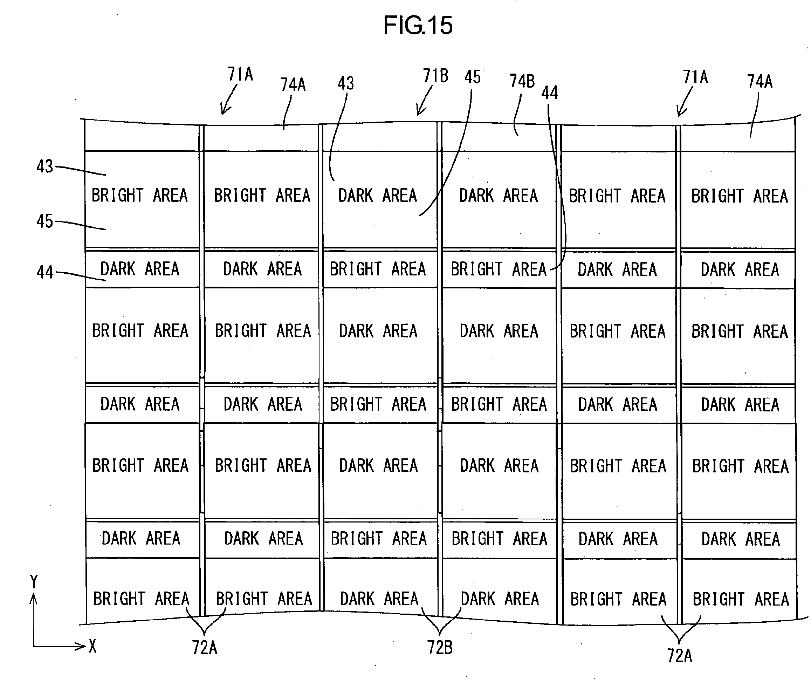

As illustrated in FIG. 15, the bright areas (the high brightness areas) and the dark areas (the low brightness areas) of the fist kind light guide plates 74A and the second kind light guide plates 74B are alternately arranged in lines in the longitudinal direction and the short-side direction (the arrangement directions of the planar light sources 71). The bright areas and the dark areas of the light exit surfaces 43 of the planar light sources 71 are arranged along the longitudinal direction and the short-side direction of the LED board 24 (the arrangement directions of the planar light sources 71) at regular intervals. Specifically, the bright areas of two light exit surfaces 43 and the dark areas of two light exit surfaces 43 are alternately arranged in lines in the longitudinal direction of the LED board 24, similar to the first embodiment. Moreover, the bright areas and the dark areas of the light exit surfaces 43 are alternately arranged in lines in the short-side direction.

The planar light sources 71 are arranged such that the light exit surfaces 43 cover about the entire surfaces of the LED boards 24. The LEDs 23 are arranged in lines at predetermined intervals along the short-side direction and the long side direction of the LED board 24.

In this embodiment, the high brightness areas and the low brightness areas of the light exit surfaces 43 of the planar light sources 71 are arranged in lines, similar to the first embodiment. Therefore, bright bands do not appear and thus high display quality can be achieved.

### <Other embodiments>

The present invention is not limited to the above embodiments explained in the above description. The following embodiments may be included in the technical scope of the present invention, for example.

(1) In the above embodiments, the planar light sources 21 are arranged in a grid. However, the planar light sources may be arranged in a single line.
(2) In the above embodiments, each light scattering surface 48 has the microscopic asperities including a number of perforations. However, the asperities may be formed in dot patterns.
(3) In the above embodiments, each light scattering surface 48 has the microscopic asperities. However, the light scattering surface 48 may be painted in white so as to scatter light. The light scattering surface 48 may be painted in white with different thicknesses of white paint according to a distance from a point of incidence at the light guide plate.

(4) In the above embodiments, the brightness distributions on each light exit surface 43 are biased with the microscopic asperities formed in the light scattering surface 48 of each light guide plate 30. However, a reflection sheet having a high reflection area and a low reflection area may be arranged on the rear surface of each light guide plate to bias the brightness distributions on each light exit surface. Various methods of preparing the reflection sheet having reflection distributions can be used. For example, making a plurality of holes in the reflection sheet at different densities or printing black dots at different densities.

(5) In the first embodiment, the top-up light guide plates 30A and the top-down light guide plates 30B are arranged every other lines in the longitudinal direction of the LED board 24. However, the top-up light guide plates 30A and the top-down light guide plates 30B can be arranged at different intervals as long as both of them are arranged in the longitudinal direction of the LED board 24.

(6) In the first embodiment, the planar light sources 21 of the top-up light guide plates 30A and the planar light sources 21 of the top-down light guide plates 30B are arranged such that the incident directions of light from the LEDs 23 to the light guide plates are opposite from each other. However, the planar light sources and the other planar light sources may be arranged such that the incident direction of light from the LEDs to the light guide plates are substantially perpendicular to each other.

(7) In the second embodiment, the brightness distributions are biased by forming the perforations such that the density thereof is different. However, each planar light source may have different shapes of asperities on the light exit surface. Alternatively, each light exit surface may be configured as a prism surface having a number of polyhedral protrusions on the light exit surface of the planar light source.

(8) In the second embodiment, the planar light sources 71 include the first kind planar light sources 71A and the second kind planar light sources 71B. The bias directions of the brightness distributions are different. However, the planar light sources may include three different kinds of planar light sources including the first kind planar light sources, the second kind planar light sources and the third planar light sources. Furthermore, they may include four or more kinds of the planar light sources.

(9) In the second embodiment, the planar light sources 71 include the first kind planar light sources 71A and the second kind planar light sources 71B. Each first kind planar light source 71A has the light scattering surface 73 in which a number of the perforations are formed such that densities on the side closer to the LED 23 is lower and those on the side farther from the LED 23 is higher. Each second kind planar light source 71B has the light scattering surface 73 in which a number of the perforations are formed such that the density on the side closer to the LED 23 is higher and that on the side farther from the LED 23 is lower. However, the densities of the perforations in the scattering surface can be set differently as long as the brightness distributions are biased differently from each other. For example, the planar light sources may include planar light sources with scattering surfaces in which perforations are formed at equal intervals and planar light sources in which perforations are formed at irregular intervals.

(10) In the second embodiment, the first kind planar light sources 71A and the second kind planar light sources 71B are arranged in the same orientation. However, the first kind planar light sources and the second kind planar light sources may be arranged in the different orientations.

(11) In the second embodiment, the brightness distributions are biased in the same manner within the light guide member 30 (i.e., the brightness distributions are biased in the same manner in two unit light guide members 72 connected to each other via the mounting portion 34). However, the brightness distributions in the unit light guide members may be differently biased.

(12) In the second embodiment, a line of the first kind light guide plates 74A and a line of the second kind light guide plates 74B are alternately arranged in the longitudinal direction of the LED board 24. However, the first kind light guide plates and the second kind light guide plates may be alternately arranged in the short-side direction of the LED board and the longitudinal lines of those may be arranged in the longitudinal direction of the LED board.

## Claims

1. A lighting device comprising a plurality of planar light sources arranged along a planar direction, each of the planar light sources including a light exit surface having a high brightness area and a low brightness area, the planar light sources being arranged such that the high brightness areas and the low brightness areas of the adjacent planar light sources are in lines.

2. The lighting device according to claim 1, wherein:
each of the planar light sources has directivity with the high brightness area and the low brightness area arranged in the same line; and
the planar light sources are arranged such that the adjacent planar light sources are in opposite orientations.

3. The lighting device according to any one of claims 1 and 2, wherein each of the planar light sources includes a light guide member with a light scattering surface on one of main surfaces and a light exit surface on another main surface, the light guide member being configured to reflect light entering therein from a flat side surface such that the light exits from the light exit surface.

4. The lighting device according to claim 3, wherein the light scattering surface has a plurality of perforations that extend in a direction perpendicular to a light axis of incident light to the light guide member.

5. The lighting device according to claim 4, wherein the perforations are formed such that a density thereof is different according to a distance from a point of incidence to the light guide member.

6. The lighting device according to any one of claims 3 to 5, further comprising a light emitting source, wherein:
the light guide member has a light source holding space in a side-edge portion; and
the light emitting source is held in the light source holding space.

7. The lighting device according to claim 6, wherein the light emitting source is an LED.

8. The lighting device according to claim 1, wherein:
the planar light sources include at least first planar light source and second planar light source, the first planar light source including the high brightness area and the low brightness area arranged in a first direction and the second planar light source including the high brightness area and the low brightness area in a second direction opposite from the first direction; and
the first planar light source and the second planar light source are adjacently arranged and in the same orientation.

9. The lighting device according to claim 8, wherein each of the planar light sources includes a light guide member with a light scattering surface on one of main surfaces and a light exit surface on another main surface, the light guide member being configured to reflect light entering therein from a flat side surface such that the light exits from the light exit surface.

10. The lighting device according to claim 9, wherein the light scattering surface has a plurality of perforations that extend in a direction perpendicular to a light axis of incident light to the light guide member.

11. The lighting device according to claim 10, wherein the perforations are formed such that a density thereof is different according to a distance from a point of incidence to the light guide member.

12. The lighting device according to any one of claims 9 to 11, further comprising a light emitting source, wherein:
the light guide member has a light source holding space in a side-edge portion; and
the light emitting source is held in the light holding space.

13. The lighting device according to claim 12, wherein the light emitting source is an LED.

14. The lighting device according to any one of claims 1 to 13, wherein:
the light exit surface of each planar light source has asperities; and
the planar light source has a biased brightness distribution achieved by forming different shapes of the asperities on the light exit surface.

15. The lighting device according to any one of claims 1 to 14, wherein the high brightness areas and the low brightness areas on the light exit surfaces of the planar light sources are arranged along an arrangement direction of the planar light sources at equal intervals.

16. The lighting device according to any one of claims 1 to 15, wherein:
each planar light source has a rectangular shape; and
the planar light sources are arranged in a grid.

17. A display device comprising:
the lighting device according to any one of claims 1 to 16; and
a display panel configured to provide display using light from the lighting device.

18. The display device according to claim 17, wherein the display panel is a liquid crystal panel including liquid crystals.

19. A television receiver comprising the display device according to any one of claims 17 and 18.
